# EUROPÄISCHE PATENTANMELDUNG

(11) **EP 4 474 136 A2**
(43) Veröffentlichungstag der Anmeldung: **11.12.2024**
(21) Anmeldenummer: 24178363.8
(22) Anmeldetag: 28.05.2024
(51) Int. Cl.: B29C 64/153, B22F 10/28, B22F 12/41, B22F 12/52, B22F 12/63, B22F 12/67, B29C 64/214, B29C 64/218, B29C 64/268, B29C 64/329, B33Y 10/00, B33Y 30/00

(54) **LASERBEARBEITUNGSEINHEIT, MODUL FÜR EINE LASERBEARBEITUNGSEINHEIT UND VERFAHREN ZUR HERSTELLUNG EINES WERKSTÜCKS**

(30) Priorität: 06.06.2023 DE 102023114805
(71) Anmelder: Ernst-Abbe-Hochschule Jena, 07745 Jena (DE); LCP-LASER-CUT-PROCESSING GmbH, 07586 Kraftsdorf (DE)
(72) Erfinder: Bliedtner, Jens, 07745 Jena (DE); Layher, Anne-Marie, 07743 Jena (DE); Layher, Michel, 07743 Jena (DE); Hopf, Andreas, 07749 Jena (DE); Thumann, Felix, 07743 Jena (DE); Störzner, Daniel, 07586 Kraftsdorf (DE); Hähle, Patrick, 07743 Jena (DE)
(74) Vertreter: Gleim Petri Patent- und Rechtsanwaltspartnerschaft mbB

(57) **Zusammenfassung**

Eine Laserbearbeitungseinheit (L), welche eine Plattform (6), eine Strahlungsquelle (2) in Form eines Lasers mit einer Abtastvorrichtung (4), eine Materialzuführungseinheit zur Aufbringung eines Pulvermaterials und einen Träger (7) umfasst, der die Materialzuführungseinheit hält mit der Abtastvorrichtung (4) mechanisch koppelt, wobei die Materialführungseinheit entlang einer parallel zur Plattform (6) ausgerichteten Achse bewegbar ist, und eine Applikationsebene vorhanden ist, in der ein von der Materialzuführungseinheit appliziertes Pulvermaterial mittels der Strahlungsquelle (2) gefügt, ein Werkstück getrennt oder Stoffeigenschaften des Werkstücks geändert werden. Um die Laserbearbeitungseinheit (L) auf möglichst einfache Weise auch für die additive Fertigung verwenden zu können, ist der Träger (7) in einer Richtung senkrecht von der Plattform (6) weg bewegbar, wodurch die Applikationsebene entsprechend einer applizierten Schichtdicke des Pulvermaterials verschiebbar ist. Weiterhin ein für denselben Zweck geeignetes Modul für eine Laserbearbeitungseinheit (L) und ein Verfahren zu Herstellung eines Werkstücks.

## Beschreibung

Die Erfindung betrifft eine Laserbearbeitungseinheit, welche eine Plattform, eine Strahlungsquelle in Form eines Lasers mit einer Abtastvorrichtung, eine Materialzuführungseinheit zur Aufbringung eines Pulvermaterials und einen Träger umfasst, der die Materialführungseinheit mit der Abtastvorrichtung mechanisch koppelt, wobei die Materialführungseinheit entlang einer parallel zur Plattform ausgerichteten Achse bewegbar ist, und eine Applikationsebene vorhanden ist, in der ein von der Materialzuführungseinheit appliziertes Pulvermaterial mittels der Strahlungsquelle gefügt, ein Werkstück getrennt oder Stoffeigenschaften des Werkstücks geändert werden.

Ferner betrifft die Erfindung ein Modul für eine Laserbearbeitungseinheit und ein Verfahren zur Herstellung eines Werkstücks.

Additive Fertigungsverfahren umfassen solche Verfahren, bei denen ein Werkstück schichtweise und automatisiert hergestellt wird. Sie sind besonders zur schnellen und kostengünstigen Herstellung von Prototypen, Werkzeugen und zur Kleinserienherstellung geeignet.

Zunächst wird von dem herzustellenden Werkstück ein Volumenmodell erzeugt. Dieses wird in definiert starke Schichten zerlegt, deren Dicke auf das gewählte additive Fertigungsverfahren angepasst ist, und die dann Ebene für Ebene während der Fertigung generiert werden, bis das Werkstück fertiggestellt ist.

Bei den additiven Fertigungsverfahren wird zwischen festkörperbasierten und pulverbasierten Verfahren unterschieden. Letzteres ist als Verfahren zur Herstellung von Bauteilen definiert, welche durch das Fügen, insbesondere das Aufschmelzen oder Sintern, von Pulvern das Werkstück herstellt. Dabei sind insbesondere durch einen Laser gestützte Verfahren nicht nur besonders präzise und erlauben eine hochaufgelöste Fertigung, sie sind auch für eine Vielzahl an Materialien geeignet.

Ein Beispiel für ein lasergestütztes, additives Fertigungsverfahren ist das selektive Laserstrahlsintern. Eine dazu nutzbare Vorrichtung umfasst ein Pulverreservoir, eine Bauplattform, eine Transporteinheit und einen Laser mit einer entsprechenden Strahlführung. Zur Erzeugung eines dreidimensionalen Bauteils wird zunächst mit Hilfe der Transporteinheit ein Pulver aus dem Pulverreservoir mit einer definierten Schichtstärke auf die Bauplattform gefördert. Die Transporteinheit kann aus einer Rakel, einer Walze oder einer Kombination aus beidem bestehen. Anschließend erfolgt die Verdichtung des Pulvers entsprechend den Schichtkonturen. Abschließend wird die Bauplattform um den Betrag einer Schichthöhe abgesenkt und der Prozess wird so lange wiederholt, bis alle Bauteilschichten erzeugt sind. Die Wahl des Lasers definiert hierbei das verwendbare Ausgangsmaterial. So werden in der Regel für Kunststoffe CO₂-Laser und für Metalle Festkörperlaser verwendet.

Eine derartige Vorrichtung zur Herstellung eines Werkstücks auf Basis eines Glaswerkstoffs ist z.B. aus der DE 102 39 369 B4 bekannt. Hier wird der Glaswerkstoff in Form eines Pulvers in einer definierten Schichtdicke aufgetragen und mittels einer Wärmequelle oder eines Lasers gesintert. Dabei wird das Pulver mittels eines Vorratsbehälters aufgetragen und mittels einer Rakel verteilt, so dass eine Schicht mit definierter Dicke entsteht. Vor Auftragen der nächsten Schicht wird eine Plattform, auf der das Werkstück hergestellt wird, abgesenkt, während Rakel und Vorratsbehälter sich auf einer unveränderlichen, zur Plattform parallelen Gerade bewegen können. Ein Nachteil eines solchen Aufbaus ist der große Platzbedarf, der darauf zurückzuführen ist, dass die Plattform beweglich ist. Ferner sind fertige Anlagen dieser Art kommerziell kaum erhältlich, so dass regelmäßig bereits vorhandene Laserbearbeitungsanlagen umgebaut werden. Dabei ist es nicht immer möglich, eine bewegliche Plattform nachzurüsten.

Es ist daher Aufgabe der Erfindung, eine Laserverarbeitungseinheit einer Laserbearbeitungsanlage, ein Modul und ein Verfahren bereitzustellen, mittels derer die Laserbearbeitungseinheit auch für die additive Fertigung verwendet werden kann. Dabei soll vor allem der Platzbedarf im Falle einer Nachrüstung verringert werden, ohne die Qualität des Fertigungsverfahrens zu reduzieren, bzw. es weiter zu verbessern.

Diese Aufgabe wird für die eingangs beschriebene Laserverarbeitungseinheit dadurch gelöst, dass der Träger in einer Richtung senkrecht von der Plattform weg bewegbar ist, wodurch die Applikationsebene entsprechend einer applizierten Schichtdicke des Pulvermaterials verschiebbar ist. Die Schichtdicke ist abhängig vom verwendeten Pulvermaterial und in der Regel kleiner als 250 µm, bevorzugt kleiner als 50 µm und überaus bevorzugt kleiner als 10 µm.

Dabei ist es von Vorteil, wenn die Laserbearbeitungseinheit eine Steuereinheit umfasst, mit der die Strahleigenschaften eines von der Strahlungsquelle emittierten Laserstrahls in mindestens zwei Einstellungen anpassbar sind, so dass der Laserstrahl in einer ersten Einstellung das Pulvermaterial fügt und in einer zweiten Einstellung das Werkstück trennt. Auf diese Weise kann mit der Laserbearbeitungseinheit zusätzlich zur Herstellung des Werkstücks durch Fügen des Pulvermaterials auch ein Trennen von bereits gefügtem Pulvermaterial oder bei der Bearbeitung eines bereits vorhandenen Werkstücks auch dieses direkt subtraktiv bearbeitet werden. Die Materialbearbeitung durch Trennen ist dabei weit zu verstehen und umfasst nicht nur das Zerteilen oder Zerlegen des bereits gefügten Pulvermaterials oder des bereits vorhandenen Werkstücks, sondern auch das oberflächliche Abtragen von Material zur Oberflächenveredelung.

In einer weiteren vorteilhaften Ausgestaltung weist die Materialzuführungseinheit eine Rakel und/oder eine Walze auf, um das Pulvermaterial gleichmäßig auf der Plattform zu verteilen und gegebenenfalls zu verdichten.

Ferner ist es günstig, wenn die Materialzuführungseinheit und/oder die Plattform ein Vibrationsmodul aufweisen und/oder beheizbar sind. Das Vibrationsmodul sorgt dafür, dass das Pulvermaterial gleichmäßiger auf der Plattform verteilt werden kann oder eine Verdichtung erfährt, während eine Heizung die Bearbeitung erleichtert und die Verarbeitung von mehr Arten an Pulvermaterial mit der Laserbearbeitungseinheit ermöglicht. Eine Heizung der Plattform und der Materialzuführungseinheit kann zum Beispiel direkt in die jeweilige Komponente integriert sein. Alternativ ist es möglich, die Plattform und die Materialzuführungseinheit indirekt zu erwärmen, zum Beispiel indem der gesamte Arbeitsraum der Laserbearbeitungseinheit erwärmt wird.

Außerdem hat es sich als vorteilhaft herausgestellt, wenn sich die Materialzuführungseinheit und die Plattform in einer evakuierten oder mit einem Prozessgas gefüllten Kammer befindet. Auch auf diese Weise können weitere Arten an Pulvermaterial mit der Laserbearbeitungseinheit verarbeitet werden.

Bei der additiven Fertigung wird das Pulvermaterial Schicht für Schicht appliziert, so dass es gerade bei der Bearbeitung von Werkstücken vorkommen kann, dass Bereiche des Werkstücks durch Pulvermaterial bedeckt werden und der Laser diese Bereiche nicht ohne weiteres erreichen kann. Es ist daher vorteilhaft, wenn die Laserbearbeitungseinheit eine Absaugung umfasst, mittels der auf die Plattform aufgebrachtes, überschüssiges Pulvermaterial entfernbar ist.

Ferner ist es von Vorteil, wenn der Träger in einer zu einer Oberfläche der Plattform parallelen Ebene bewegbar ist. Auf diese Weise wird der Arbeitsbereich der Laserverarbeitungseinheit vergrößert, um noch größere Werkstücke herstellen zu können.

Es ist außerdem günstig, wenn die Applikationsebene einer Fokusebene der Strahlenquelle entspricht. Dies erlaubt eine additive Fertigung mit der größtmöglichen Auflösung.

Die Aufgabe wird ferner durch ein Modul für eine Laserbearbeitungseinheit gelöst, das eine Befestigungsvorrichtung zur Montage in einer Laserbearbeitungseinheit, eine Materialzuführungseinheit mit einer Materialaufnahme, einer Dosiereinheit und einem Transportsystem, mit der ein Pulvermaterial auf eine Plattform der Laserbearbeitungseinheit auftragbar ist, und eine Linearachse mit einem Motor umfasst, entlang welcher die Materialzuführungseinheit mittels des Motors bewegbar ist. Dies erlaubt, eine Laserbearbeitungseinheit, welche lediglich Werkstücke Trennen kann, auf einfache Weise nachzurüsten und eine additive Fertigung zu ermöglichen.

Dabei ist es von Vorteil, wenn die Materialaufnahme mindestens zwei Pulverkammern aufweist. Somit kann ein Werkstück hergestellt werden, welches aus Schichten unterschiedlicher Materialien oder aus einem Mischmaterial besteht.

Außerdem hat es sich aus vorteilhaft herausgestellt, wenn das Modul einen Bildsensor umfasst, mit dem eine aus dem Pulvermaterial aufgetragene Schicht aufgenommen wird. Dies erlaubt, das Werkstück direkt im Herstellungsprozess zu untersuchen und diesen entsprechend anzupassen. Außerdem kann auch das Pulverbett auf Homogenität untersucht werden, um den Herstellungsprozess weiter zu verbessern und direkt auf Abweichungen der gewünschten Prozessparameter reagieren zu können, bevor das Pulvermaterial gefügt worden ist.

Ferner wird die Aufgabe durch ein Verfahren zur Herstellung eines Werkstücks gelöst, welches die folgenden Schritte umfasst:
a. Aufbringen eines Pulvermaterials auf einer Plattform in einer Schicht mittels einer Materialzuführungseinheit,
b. Fügen von mindestens einem Teil des in der Schicht vorhandenen Pulvermaterials mittels eines von einer Strahlungsquelle emittierten Laserstrahls,
c. Verfahren eines Trägers, an dem die Materialzuführungseinheit befestigt ist, senkrecht von der Plattform weg,
d. weiteres Aufbringen des Pulvermaterials mittels der Materialzuführungseinheit auf der ebenen Plattform in einer weiteren Schicht,
e. erneutes Fügen von mindestens einem Teil des in der weiteren Schicht vorhandenen Pulvermaterials mittels des von einer Strahlungsquelle emittierten Laserstrahls,
f. Trennen zumindest eines Teils des in der weiteren Schicht oder der Schicht befindlichen, gefügten Pulvermaterials mittels des von der Strahlenquelle emittierten Laserstrahls.

Es ist dabei von Vorteil, wenn das Pulvermaterial in der Schicht und der weiteren Schicht jeweils vor dem Fügen mittels einer Rakel und/oder einer Walze geglättet wird. Auf diese Weise wird die Reproduzierbarkeit und die Genauigkeit des Verfahrens verbessert, da sichergestellt wird, dass ein von der Materialzuführungseinheit aufgetragenes Pulverbett stets homogen, glatt und von konsistenter Schichtdicke ist.

Es ist ferner von Vorteil, wenn nicht gefügtes, überschüssiges Pulvermaterial von der Plattform entfernt wird. Auf diese Weise werden Pulvermaterialansammlungen vermieden, welche während der Fertigung auftreten können. Das Entfernen des Pulvermaterials kann über einen Abtransport von dem überschüssigem mittels Vibration der Plattform oder eine Absaugung realisiert werden.

Bei der Durchführung des Verfahrens ist es außerdem günstig, wenn die Materialzuführungseinheit neben dem Pulvermaterial zumindest ein weiteres Pulvermaterial in der Schicht oder der weiteren Schicht aufbringt. Dies erlaubt die schichtweise oder auch gemischte Verwendung verschiedener Materialien.

Die Aufgabe wird auch durch ein auf einem Speichermedium enthaltenes Computerprogramm gelöst, welches, wenn es auf einem Rechner ausgeführt wird das eben beschriebene Verfahren ausführt.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Es zeigen:
- Fig. 1: eine Prinzipdarstellung einer Laserbearbeitungseinheit,
- Fig. 2: ein Modul der Laserbearbeitungseinheit,
- Fig. 3: eine Materialzuführungseinheit, wie sie in dem Modul verwendet werden kann,

- Fig. 4: eine Ausführung einer Plattform der Laserbearbeitungseinheit,
- Fig. 5: eine alternative Ausgestaltung der Laserbearbeitungseinheit und
- Fig. 6a-d: das Modul bei der Durchführung verschiedener Verfahrensschritte.

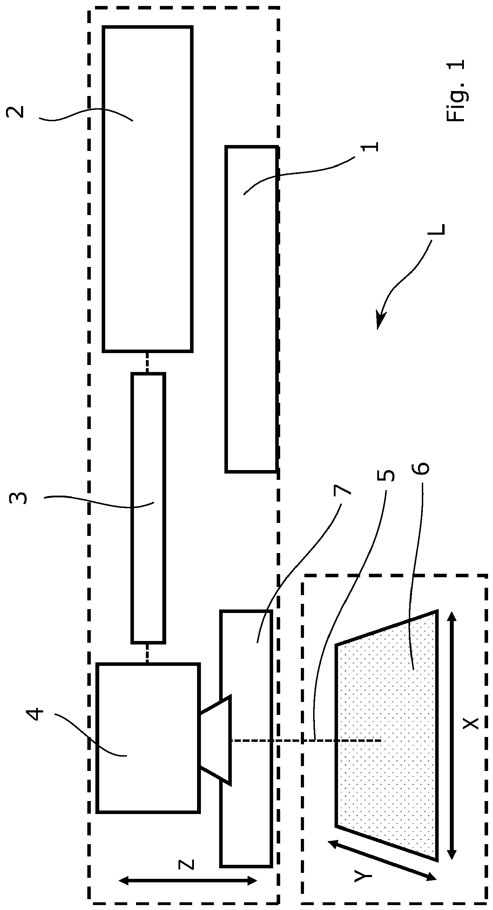

Die **Fig. 1** zeigt eine Laserbearbeitungseinheit L, welche eine Steuereinheit 1, eine Strahlungsquelle 2, die einen Laserstrahl 5 emittiert, eine Strahlformung 3, die den Laserstrahl 5 formt und eine Abtastvorrichtung 4, die den Laserstrahl 5 auf eine Plattform 6 lenkt, aufweist. Über der Plattform ist ein Träger 7 angebracht, der entsprechende Mittel aufweist, ein Pulvermaterial kontrolliert auf die Plattform 6 aufzutragen, um es zu einem Werkstück zu fügen. Der Träger 7 und gegebenenfalls auch die Abtastvorrichtung 4 können senkrecht von der Plattform 6 weg oder zu dieser hinbewegt werden.

Die Laserbearbeitungseinheit L ist auch für das Trennen von Werkstücken geeignet. Bei derartigen System sind die Energie und der Fokus zusammen mit anderen Strahleigenschaften des Laserstrahls 5 einstellbar, so dass die Laserbearbeitungseinheit L auf verschiedene Materialien angepasst werden kann. Diese Eigenschaft wird in der Erfindung genutzt, um neben dem additiven auch ein subtraktives Fertigungsverfahren in einer einzigen Laserbearbeitungseinheit L bereitzustellen. Mittels der Steuereinheit 1 können die Strahleigenschaften des Laserstrahls 5 in mindestens zwei Einstellungen angepasst werden. In einer ersten Einstellung ist der Laserstrahl 5 so beschaffen, dass er das Pulvermaterial fügt, während in einer zweiten Einstellung ein bereits vorhandenes oder durch das Pulvermaterial hergestelltes Werkstück getrennt wird. Dies kann zum Beispiel über die Strahlungsenergie oder den Fokus reguliert werden.

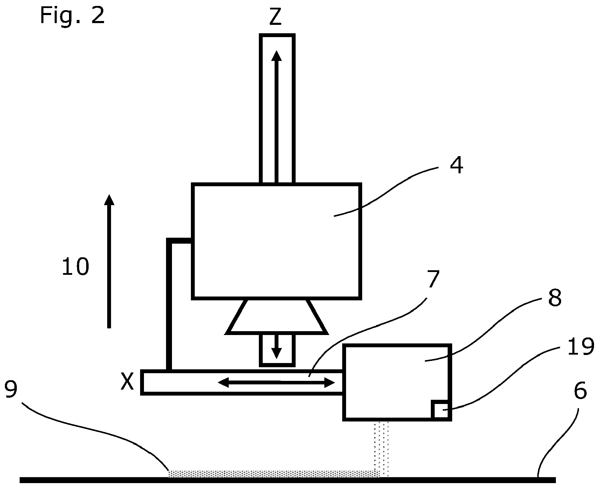

Die Kombination aus Abtastvorrichtung 4 und Träger 7 ist genauer in der **Fig. 2** dargestellt. Der Träger 7 hält eine Materialzuführungseinheit 8, die parallel zu der Plattform 6 entlang einer Linearachse über einen im Träger 7 enthaltenen Motor bewegbar ist. Während der Bewegung wird eine Schicht Pulvermaterial 9 auf die Plattform 6 aufgetragen und anschließend mittels des Laserstrahls 5 gefügt. Die Ebene, in der das Pulvermaterial 9 gefügt oder, falls vorhanden, das Werkstück getrennt wird, wird als Applikationsebene bezeichnet. Nachdem das in der Applikationsebene befindliche Pulvermaterial 9 gefügt oder das Werkstück getrennt wurde, bewegt sich der Träger 7 zusammen mit der Materialzuführungseinheit 8 und der mit ihm mechanisch gekoppelten Abtastvorrichtung 4 in einer Aufbaurichtung 10 senkrecht von der Plattform 6 weg, bevor eine weitere Schicht Pulvermaterial 9 aufgetragen wird. Die Bewegung in der Aufbaurichtung 10 erfolgt dabei entsprechend einer applizierten Schichtdicke des Pulvermaterials 9 und ist typischerweise von dessen Eigenschaften abhängig.

Die Kombination aus Träger 7 und Materialzuführungseinheit 8 kann dabei als Modul ausgebildet sein, wobei das Modul über eine entsprechende Befestigungsvorrichtung zur Montage in der Laserbearbeitungseinheit L befestigt ist. Hier umfasst die Materialzuführungseinheit 8 ferner einen Bildsensor 19, mit der die aufgetragene Schicht Pulvermaterial 9 aufgenommen wird. Ein in der Steuereinheit 1 ausgeführter Algorithmus wertet die aufgenommenen Bilder aus, um zum Beispiel die Homogenität der Schicht aus Pulvermaterial 9 oder auch den Zustand des Werkstücks zu überwachen.

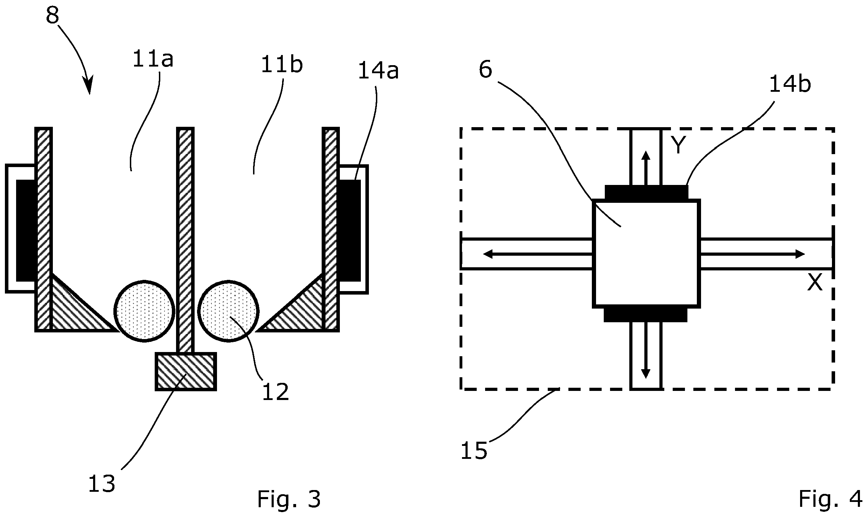

Die Materialzuführungseinheit 8 ist genauer in Fig. 3 dargestellt. Sie umfasst eine Materialaufnahme, hier in Form zweier Pulverkammern 11a, 11b, in welchen das Pulvermaterial 9 aufgenommen wird. Mittels einer Dosiereinheit 12, welche hier als jeweils eine Walze pro Pulverkammer 11a, 11b ausgebildet ist, wird das Pulvermaterial 9 kontrolliert auf die Plattform 6 aufgetragen. Während oder nachdem es aufgetragen worden ist, wird das Pulvermaterial 9 mittels eines Transportsystems 13, welches hier als eine Rakel ausgebildet ist, geglättet. Eine Alternative zur Rakel wäre eine weitere Walze, die das Pulvermaterial 9 zusätzlich noch verdichten würde. Auch eine Kombination beider Methoden ist denkbar.

Seitlich an der Materialzuführungseinheit 8 befindet sich ein Zusatzmodul 14a. Dabei kann es sich zum Beispiel um ein Vibrationsmodul, eine Heizung oder eine Kombination aus beiden handeln. Das Vibrationsmodul sorgt für einen gleichmäßigen Auftrag des Pulvermaterials 9 und die Heizung wärmt das Pulvermaterial 9 vor, so dass seine Bearbeitung erleichtert wird. Ein solches Zusatzmodul 14a kann alternativ oder zusätzlich auch in die Plattform 6 integriert werden. Neben einer besseren Verteilung des Pulvermaterials 9 je Schicht können über ein Vibrationsmodul in der Plattform zusätzlich Pulveranhäufungen vermieden werden, die gerade bei der Herstellung von Werkstücken, die aus einer großen Zahl an Schichten bestehen, auftreten können.

Fig. 4 zeit die Plattform 6 der Laserbearbeitungseinheit L aus der Vogelperspektive in einer alternativen Ausführung. Hier wird die Plattform 6 von einem Verschiebemechanismus 15 gehalten, der die Plattform 6 in zwei Freiheitsgraden in einer Ebene bewegt. Dies erlaubt es, weitaus größere Werkstücke herzustellen, da ein größerer Arbeitsbereich zur Verfügung steht. Die Plattform 6 weist hier ein weiteres Zusatzmodul 14b auf, welches, ähnlich wie oben bereits für die Materialzuführungseinheit 8 beschrieben, eine Heizung, ein Vibrationsmodul oder eine Kombination aus beiden sein kann.

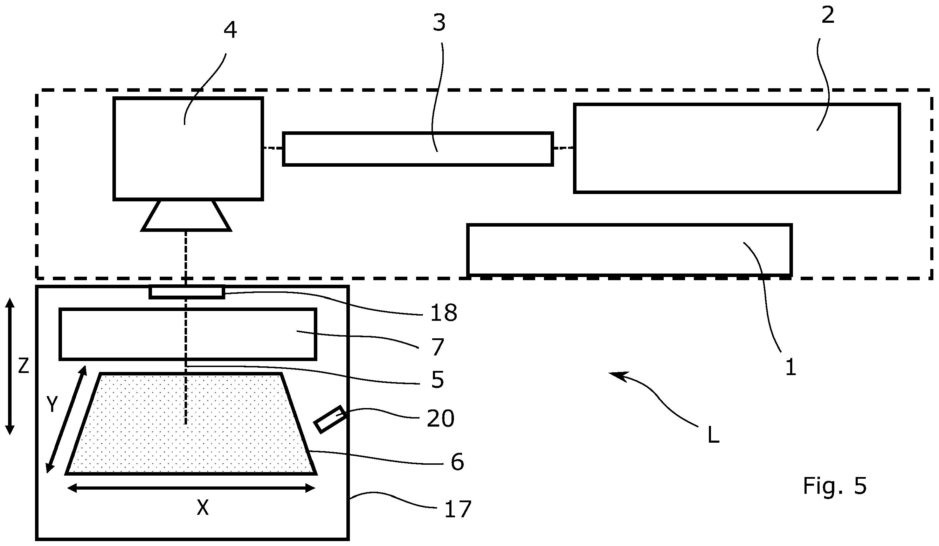

Fig. 5 zeigt eine alternative Ausführung der Laserbearbeitungseinheit L, welche im Wesentlichen identisch zum Aufbau der in Fig. 1 gezeigten ist. Hier jedoch weist die Laserbearbeitungseinheit L eine Kammer 17 mit einem Eintrittsfenster 18 für den Laserstrahl 5 auf. Der Träger 7 mit der Materialzuführungseinheit 8 befindet sich zusammen mit der Plattform 6 innerhalb der Kammer und ist von der Abtastvorrichtung 4 entkoppelt. Nach der Bearbeitung jeder Schicht bewegt sich hier der Träger 7, während die Abtastvorrichtung 4 in Position bleibt und der Fokus des Laserstrahls 5 mittels der Strahlformung 3 entsprechend angepasst wird. Alternativ kann die Abtastvorrichtung linear zusammen mit dem Träger 7 bewegt werden. Dazu muss sie sich jedoch ebenfalls innerhalb der Kammer 17 befinden.

Dieser Aufbau bietet einige Vorteile. Zum einen ist es möglich, die Kammer 17 zu evakuieren oder mit einem Prozessgas zu füllen, um die Laserbearbeitungseinheit L für eine Reihe weiterer Pulvermaterialen 9 verwenden zu können, die zu ihrer Bearbeitung diese Bedingungen benötigen, oder aber die Präzision des Herstellungsverfahrens weiter zu verbessern. Ferner ist es möglich, die Kammer 17 zu beheizen. Dies kann durch eine separate Heizung, über die Plattform 6 oder aber über die Materialzuführungseinheit 8, zum Beispiel mittels der oben beschriebenen Zusatzmodule 14a, 14b bewerkstelligt werden.

Ferner weist die Kammer 17 zusätzlich eine Absaugung 20 auf, mit der überschüssiges, nicht gefügtes Pulvermaterial 9 entfernt wird. Dies kann mit jeder fertiggestellten Schicht erfolgen oder nach einer Reihe von Verfahrensschritten, wenn sich eine hinreichende Menge an überschüssigem Pulvermaterial 9 auf der Plattform 6 angesammelt hat. Im Allgemeinen kann die Absaugung 20 auch in einer Laserbearbeitungseinrichtung ohne Kammer 17 eingesetzt werden.

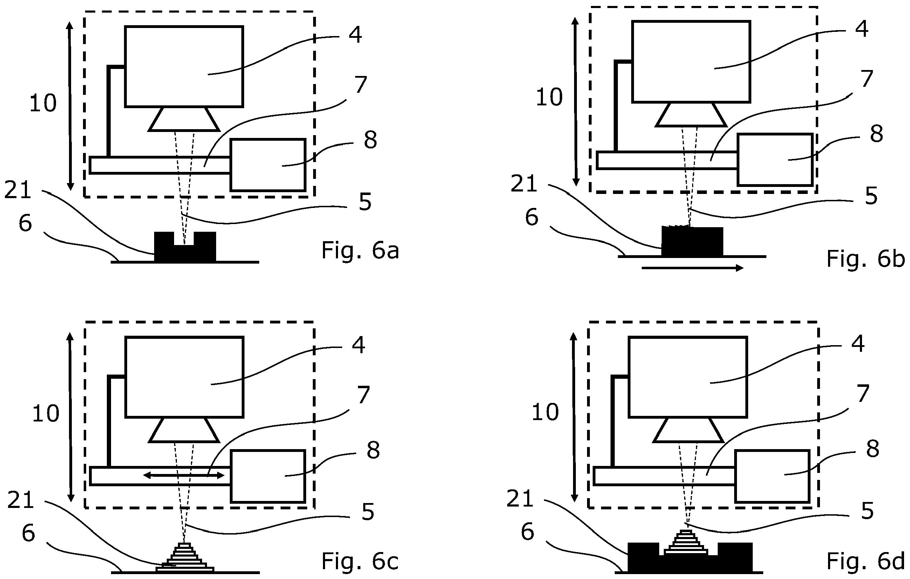

Die Fig. 6a bis 6d zeigen die verschiedenen Verfahrensarten, die mit der Laserbearbeitungseinheit L ausführbar sind. Fig. 6a zeigt das Trennen eines Werkstücks 21, welches sich auf der Plattform 6 befindet. Dazu wird Schicht für Schicht abgetragen, wobei die Abtastvorrichtung 4 hier zusammen mit dem Träger 7 entgegen der Aufbaurichtung 10 nach Abtrag jeder Schicht auf das Werkstück 21 zubewegt wird. Alternativ kann aber auch über die Strahlformung 3 der Fokus des Laserstrahls 5 angepasst werden. Fig. 6b zeigt eine weitere Möglichkeit, das Werkstück 21 zu bearbeiten. Hier werden lediglich die obersten Schichten oder die oberste Schicht abgetragen oder geglättet, so dass das Werkstück 21 poliert wird. Außerdem können in diesem Schritt alternativ oder zusätzlich Stoffeigenschaften des Werkstücks 21 geändert werden, so zum Beispiel durch Wärmebehandlung oder dergleichen.

Die Fig. 6c zeigt das Fügen des Werkstücks 21, welches weiter oben bereits genauer beschrieben worden ist. Bisher nicht thematisiert wurde das Fügen von Halbzeugen oder Bauteilen, welches in der Fig. 6d dargestellt ist. Ein Werkstück 21 wird entweder bereitgestellt oder wie in Fig. 6a gezeigt vorbereitet, und anschließend wird das Pulvermaterial 9 aufgetragen, wie es bereits oben beschrieben worden ist. Das Pulvermaterial 9 kann dabei das gleiche oder ein anderes Material als das Werkstück 21 haben.

Diese in Fig. 6a bis 6d gezeigten Prozesse können beliebig miteinander kombiniert werden. So kann ein Werkstück 21 aus zwei verschiedenen Materialien gefertigt werden. Dazu wird eine Materialzuführungseinheit 8 mit zwei Pulverkammern 11a, 11b verwendet. Zunächst wird ein Werkstück 21 aus einem ersten Material, welches sich in der ersten Pulverkammer 11a befindet, gefertigt. Anschließend wird ein Teil des Werkstücks 21 getrennt. Nun wird mittels der zweiten Pulverkammer 11b ein zweites Material mit dem Werkstück 21 gefügt, oder es wird ein weiterer Teil des Werkstücks 21 aus dem ersten Material gefügt. Abschließend wird das Werkstück 21 poliert und auf diese Weise fertiggestellt. Im Allgemeinen können die beschriebenen Schritte beliebig nacheinander ausgeführt werden und Materialzuführungseinheiten 4 mit mehr als den zwei Pulverkammern 11a, 11b verwendet werden. Ferner kann der Fertigungsprozess unterbrochen und Material aus den Pulverkammern 11a, 11b getauscht werden, indem entweder die Materialzuführungseinheit 4 neu bestückt oder komplett getauscht wird. Dies erlaubt es, mit der Laserbearbeitungseinheit L eine Vielzahl an Materialien zu verarbeiten und hochkomplexe Werkstücke 21 herzustellen, insbesondere auch Multimaterialsysteme.

### Bezugszeichenliste

- 1: Steuereinheit
- 2: Strahlungsquelle
- 3: Strahlformung
- 4: Abtastvorrichtung
- 5: Laserstrahl
- 6: Plattform
- 7: Träger
- 8: Materialzuführungseinheit
- 9: Pulvermaterial
- 10: Aufbaurichtung
- 11a: erste Pulverkammer
- 11b: zweite Pulverkammer
- 12: Dosiereinheit
- 13: Transportsystem
- 14a, 14b: Zusatzmodul
- 15: Verschiebemechanismus
- 16: Bild
- 17: Kammer
- 18: Eintrittsfenster
- 19: Bildsensor
- 20: Absaugung
- 21: Werkstück
- L: Laserbearbeitungseinheit
- X, Y, Z: Raumrichtungen

## Patentansprüche

1. Laserbearbeitungseinheit, umfassend
- eine Plattform (6),
- eine Strahlungsquelle (2) in Form eines Lasers mit einer Abtastvorrichtung (4),
- eine Materialzuführungseinheit (8) zur Aufbringung eines Pulvermaterials (9),
- einen Träger (7), der die Materialführungseinheit mit der Abtastvorrichtung (4) mechanisch koppelt, wobei
- die Materialführungseinheit entlang einer parallel zur Plattform (6) ausgerichteten Achse bewegbar ist,
- eine Applikationsebene vorhanden ist, in der ein von der Materialzuführungseinheit (8) appliziertes Pulvermaterial (9) mittels der Strahlungsquelle (2) gefügt, ein Werkstück (21) getrennt oder Stoffeigenschaften des Werkstücks (21) geändert werden,
**dadurch gekennzeichnet, dass**
- der Träger (7) in einer Richtung senkrecht von der Plattform (6) weg bewegbar ist, wodurch die Applikationsebene entsprechend einer applizierten Schichtdicke des Pulvermaterials (9) verschiebbar ist.

2. Laserbearbeitungseinheit nach Anspruch 1, umfassend außerdem eine Steuereinheit (1), mit der die Strahleigenschaften eines von der Strahlungsquelle (2) emittierten Laserstrahls (5) in mindestens zwei Einstellungen anpassbar sind, so dass der Laserstrahl (5) in einer ersten Einstellung das Pulvermaterial (9) fügt und in einer zweiten Einstellung das Werkstück (21) trennt.

3. Laserbearbeitungseinheit nach Anspruch 1 oder 2, **dadurch gekennzeichnet, dass** die Materialzuführungseinheit (8) eine Rakel und/oder eine Walze aufweist.

4. Laserbearbeitungseinheit nach einem der Ansprüche 1 bis 3, **dadurch gekennzeichnet, dass** die Materialzuführungseinheit (8) und/oder die Plattform (6) ein Vibrationsmodul aufweisen und/oder beheizbar sind.

5. Laserbearbeitungseinheit nach einem der Ansprüche 1 bis 4, **dadurch gekennzeichnet, dass** sich die Materialzuführungseinheit (8) und die Plattform (6) in einer evakuierten oder mit einem Prozessgas gefüllten Kammer (17) befindet.

6. Laserbearbeitungseinheit nach einem der Ansprüche 1 bis 5, **dadurch gekennzeichnet, dass** die Laserbearbeitungseinheit (L) eine Absaugung (20) umfasst, mittels der auf die Plattform (6) aufgebrachtes, überschüssiges Pulvermaterial (9) entfernbar ist.

7. Laserbearbeitungseinheit nach einem der Ansprüche 1 bis 6, **dadurch gekennzeichnet, dass** der Träger (7) in einer zu einer Oberfläche der Plattform (6) parallelen Ebene bewegbar ist.

8. Laserbearbeitungseinheit nach einem der Ansprüche 1 bis 7, **dadurch gekennzeichnet, dass** die Applikationsebene einer Fokusebene der Strahlungsquelle (2) entspricht.

9. Modul für eine Laserbearbeitungseinheit, umfassend
- eine Befestigungsvorrichtung zur Montage in einer Laserbearbeitungseinheit (L),
- eine Materialzuführungseinheit (8) mit einer Materialaufnahme, einer Dosiereinheit (12) und einem Transportsystem (13), mit der ein Pulvermaterial (9) auf eine Plattform (6) der Laserbearbeitungseinheit (L) auftragbar ist, und
- eine Linearachse mit einem Motor, entlang welcher die Materialzuführungseinheit (8) mittels des Motors bewegbar ist.

10. Modul nach Anspruch 9, **dadurch gekennzeichnet, dass**
- die Materialaufnahme mindestens zwei Pulverkammern (11a, 11b) aufweist.

11. Modul nach Anspruch 9 oder 10, **dadurch gekennzeichnet, dass**
- das Modul einen Bildsensor (19) umfasst, mit dem eine aus dem Pulvermaterial (9) aufgetragene Schicht aufgenommen wird.

12. Verfahren zur Herstellung eines Werkstücks (21), umfassend die folgenden Schritte:
- Aufbringen eines Pulvermaterials (9) auf einer Plattform (6) in einer Schicht mittels einer Materialzuführungseinheit (8),
- Fügen von mindestens einem Teil des in der Schicht vorhandenen Pulvermaterials (9) mittels eines von einer Strahlungsquelle (2) emittierten Laserstrahls (5),
- Verfahren eines Trägers (7), an dem die Materialzuführungseinheit (8) befestigt ist, senkrecht von der Plattform (6) weg,
- weiteres Aufbringen des Pulvermaterials (9) mittels der Materialzuführungseinheit (8) auf der ebenen Plattform (6) in einer weiteren Schicht,
- erneutes Fügen von mindestens einem Teil des in der weiteren Schicht vorhandenen Pulvermaterials (9) mittels des von einer Strahlungsquelle (2) emittierten Laserstrahls (5),
- Trennen zumindest eines Teils des in der weiteren Schicht oder der Schicht befindlichen, gefügten Pulvermaterials (9) mittels des von der Strahlungsquelle (2) emittierten Laserstrahls (5).

13. Verfahren nach Anspruch 12, wobei
das Pulvermaterial (9) in der Schicht und der weiteren Schicht jeweils vor dem Fügen mittels einer Rakel und/oder einer Walze geglättet wird.

14. Verfahren nach Anspruch 12 oder 13, wobei
nicht gefügtes, überschüssiges Pulvermaterial (9) von der Plattform (6) entfernt wird.

15. Verfahren nach einem der Ansprüche 12 bis 14, wobei
die Materialzuführungseinheit (8) neben dem Pulvermaterial (9) zumindest ein weiteres Pulvermaterial (9) in der Schicht oder der weiteren Schicht aufbringt.

16. Auf einem Speichermedium enthaltenes Computerprogramm, welches, wenn es auf einem Rechner ausgeführt wird, ein Verfahren nach einem der Ansprüche 12 bis 15 ausführt.
